# EUROPÄISCHE PATENTANMELDUNG

(11) **EP 2 093 474 A2**
(43) Veröffentlichungstag der Anmeldung: **26.08.2009**
(21) Anmeldenummer: 09001656.9
(22) Anmeldetag: 06.02.2009
(51) Int. Cl.: F16N 31/00, B65D 77/06, F16N 19/00

(54) **Behälter und Einrichtung zum Sammeln von Schmierstoff**

(30) Priorität: 20.02.2008 DE 202008002382 U
(71) Anmelder: Lincoln GmbH, 69190 Walldorf (DE)
(72) Erfinder: Trinkel, Ralf, 67229 Gerolsheim (DE); Schönfeld, Andreas, 68789 St. Leon-Rot (DE); Müller, Tobias, 76703 Kraichtal (DE)
(74) Vertreter: KEIL & SCHAAFHAUSEN Patentanwälte

(57) **Zusammenfassung**

Die Erfindung betrifft einen Auffangbehälter (1) sowie eine Einrichtung zum Sammeln von Schmierstoff, insbesondere Altschmierstoff. Der Schmierstoff-Auffangbehälter (1) weist dabei eine formstabile Hülle (5) und einen darin aufgenommenen Auffangbeutel (7) auf.

## Beschreibung

Die Erfindung betrifft einen Auffangbehälter sowie eine Einrichtung zum Sammeln von Schmierstoff, insbesondere Altschmierstoff.

Auf Grund der regelmäßigen Schmierstoffförderung beispielsweise an Schmierstellen, die von einer Zentralschmieranlage versorgt werden, kommt es im Laufe der Zeit zum Austritt von Schmierstoff in die Umwelt bzw. in die nähere Umgebung. Dies ist aus verschiedenen Gründen wie insbesondere der gewünschten Sauberkeit, Umweltverträglichkeit, Arbeitssicherheit, Wiederverwertung des Schmierstoffes oder dgl. unerwünscht, weshalb das Bedürfnis besteht, den aus den Lagerstellen bzw. Schmierstellen austretenden alten Schmierstoff aufzufangen und zu sammeln. Dazu ist es bekannt, Auffangflaschen einzusetzen, die direkt an den Schmierstellen angebracht sind. Hierbei ist es erforderlich, an jeder einzelnen Schmierstelle eine separate Auffangflasche vorzusehen. Insbesondere bei weitläufigen und/oder schwer zugänglichen Anlagen bzw. Schmierstellen, ist dies mit einem erheblichen logistischen und zeitlichen Aufwand verbunden. Darüber hinaus können die Auffangflaschen auch leicht zerstört werden. Außerdem gestaltet sich die Entsorgung der dann in der Regel zahlreich vorhandenen Auffangflaschen als aufwändig.

Aufgabe der vorliegenden Erfindung ist es, den Aufwand zum Auffangen und Sammeln von Altschmierstoff, welcher von Schmierstellen von Anlagen oder dgl. abgegeben wird, zu vereinfachen.

Erfindungsgemäß wird diese Aufgabe durch einen Schmierstoff-Auffangbehälter mit den Merkmalen des Anspruches 1 sowie eine Schmierstoffsammeleinrichtung mit den Merkmalen des Anspruches 11 gelöst. Vorteilhafte Ausgestaltungen und Weiterbildungen sind in den Unteransprüchen angegeben.

Ein erfindungsgemäßer Schmierstoff-Auffangbehälter umfasst eine formstabile Hülle und einen darin aufgenommenen Auffangbeutel, welcher wenigstens eine Einfüllöffnung aufweist. Vorteilhafterweise ermöglicht dies eine gegenüber dem Stand der Technik verbesserte Robustheit und Auslaufsicherheit. Gleichzeitig ist der Schmierstoff-Auffangbehälter besonders leicht.

Die formstabile Hülle ist beispielsweise kastenförmig oder zylinderförmig ausgestaltet. Insbesondere weist die formstabile Hülle eine allseitig geschlossene Wandung auf. Es kann jedoch auch vorgesehen sein, die formstabile Hülle gitterartig, beispielsweise korbähnlich oder dgl., auszugestalten. Dabei ist der Auffangbeutel - abgesehen von einer Einfüllöffnung - vorzugsweise allseitig geschlossen.

Wenn die formstabile Hülle des Schmierstoff-Auffangbehälters als Wandmaterial Karton, Pappe oder Wellpappe aufweist, kann der Auffangbehälter mit besonders geringem Gewicht und zugleich kostengünstig hergestellt werden. Vorteilhafterweise ermöglicht dies auch eine einfache optische Gestaltung der Außenseite durch Bedrucken.

Gemäß einer Weiterbildung der Erfindung ist es vorgesehen, dass der Auffangbeutel ein Kunststoffbeutel ist, der als ein an seinem Inneren verschweißter Schlauch ausgebildet sein kann. Bei dem Kunststoff handelt es sich beispielsweise um ein thermoplastisches Material.

Zur Befestigung des Auffangbeutels in der formstabilen Hülle und/oder zur Steigerung der Stabilität des Auffangbeutels können der Auffangbeutel und das Wandmaterial der Hülle einen Materialverbund bilden. Beispielsweise ist der Auffangbeutel bzw. das Kunststoffmaterial des Auffangbeutels auf das Wandmaterial der Hülle auflaminiert.

Nach einer bevorzugten Ausgestaltung des Schmierstoff-Auffangbehälters ist die Einfüllöffnung mit einem Verschluss, insbesondere einem Schnellverschluss, versehen. Dies ermöglicht ein dichtes Verschließen des Schmierstoff-Auffangbehälters z. B. zum Transport. Als Verschluss ist dabei beispielsweise ein Schraubverschluss, ein Bajonettverschluss, ein Stopfenverschluss oder dgl. vorgesehen.

Für eine möglichst kontrollierte Befüllung weist der erfindungsgemäße Schmierstoff-Auffangbehälter vorzugsweise ein Anschlusselement zum Anschluss einer Sammelleitung auf. Diese Sammelleitung dient dazu, Schmierstoff von einer oder mehreren Schmierstelle/n in den Schmierstoff-Auffangbehälter zu leiten. Als Anschlusselement kann ein Kupplungselement, z. B. eine Schraub-, Steck- oder Rastkupplung oder dgl. verwendet werden.

Um eine ungewollte Entleerung des Schmierstoff-Auffangbehälters zu verhindern, ist gemäß einer Weiterbildung der Erfindung an der Einfüllöffnung ein Rückschlagventil angebracht. Dieses ist beispielsweise so ausgestaltet, dass es bei einem außerhalb des Schmierstoff-Auffangbehälters an der Einfüllöffnung herrschenden Druck, insbesondere Schmierstoffdruck, öffnet.

Nach einer weiteren Ausführungsform ist vorgesehen, dass das Rückschlagventil durch ein in die Einfüllöffnung einsetzbares Anschlussstück, insbesondere einer Sammelleitung, öffenbar ist, indem ein Dichtungselement des Rückschlagventils gegen eine Federkraft aus einem Ventilsitz abhebbar ist, wodurch ein Strömungsquerschnitt freigeben wird. Vorteilhafterweise ermöglicht dies neben einer kontrollierten Befüllung des Schmierstoff-Auffangbehälters auch eine kontrollierte Entleerung. Es wird bevorzugt, wenn der Schmierstoff-Auffangbehälter automatisch verschlossen wird, sobald das Anschlussstück aus der Einfüllöffnung entfernt wird. Das Dichtungselement ist hierzu bspw. entlang einer axialen Richtung der Einfüllöffnung verschiebbar federnd gelagert.

Für eine gute Ausrichtung der Einfüllöffnung ist gemäß einer Weiterbildung vorgesehen, dass die Einfüllöffnung insbesondere wiederholbar lösbar an der formstabilen Hülle befestigt ist. Die wiederholbar lösbare Befestigung kann dabei beispielsweise durch eine Überwurfmutter bewirkt werden, welche auf einen an der Einfüllöffnung vorgesehenen Einfüllstutzen, der durch ein entsprechendes Loch an der formstabilen Hülle hindurch gesteckt wird, aufgeschraubt wird.

Für eine verbesserte Handhabung von Auffangbeutel und Schmierstoff-Auffangbehälter kann der Auffangbeutel im Bereich der Einfüllöffnung insbesondere wiederholbar lösbar befestigt und insbesondere ansonsten lose in der Hülle aufgenommen sein. Vorteilhafterweise ermöglicht dies, zur Entsorgung des Altschmierstoffes lediglich den Auffangbeutel zu entsorgen und einen neuen Auffangbeutel in den Schmierstoff-Auffangbehälter einzulegen. Gleichzeitig kann durch die Befestigung des Auffangbeutels an der formstabilen Hülle die Einfüllöffnung definiert ausgerichtet werden.

Die Erfindung betrifft außerdem eine Schmierstoffsammeleinrichtung mit wenigstens einem an einer Schmierstelle anbringbaren Auffangelement zum Auffangen von Schmierstoff, welcher von der Schmierstelle abgegeben wird, wobei das Auffangelement über wenigstens eine Sammelleitung mit wenigstens einem Auffangbehälter, insbesondere einem Auffangbehälter gemäß einer der vorstehend beschriebenen Ausgestaltungen, in Strömungsverbindung steht. Das Auffangelement und/oder die Sammelleitung sind vorzugsweise so ausgestaltet, dass ein Auffangen bzw. ein Ableiten von Schmierstoff unter Ausnutzung der Schwerkraft möglich ist, so dass ggf. keine weiteren Fördermittel oder dgl. erforderlich sind. Die Sammelleitung kann dabei mehrere Auffangelemente verbinden, wobei die Sammelleitung als Ringleitung ausgestaltet sein kann. Auf diese Weise lässt sich der Schmierstoff zu einem vorzugsweise in der Nähe einer Schmierstoffpumpe angeordneten Auffangbehälter leiten, der somit schnell und einfach durch einen leeren Behälter ersetzt werden kann.

Der Schmierstoff kann entweder lediglich aufgefangen werden oder es wird den Schmierstellen ein Absaugelement zugeordnet, das verbrauchten Schmierstoff aus der Schmierstelle absaugt und der Sammelleitung zuführt.

Der Austausch des Auffangbehälters kann dadurch erleichtert werden, dass der Auffangbehälter wiederholbar lösbar mit der Sammelleitung verbunden ist. Dazu ist insbesondere eine Schnellkupplung, beispielsweise eine Schraub-, Steck-, Rastkupplung oder dgl. vorgesehen. Vorzugsweise weist das der Sammelleitung zugeordnete Kupplungsstück dabei ein Rückschlagventil auf, welches bei einem Lösen der Verbindung zum Schmierstoff-Auffangbehälter schließt.

Vorzugsweise weist die Schmierstoffsammelvorrichtung wenigstens eine Halterung zur wiederholbar lösbaren Befestigung des Auffangbehälters auf. Dabei lässt sich die Verbindung zwischen der Sammelleitung und dem Auffangbehälter leicht trennen, so dass der Auffangbehälter aus der Halterung entnommen und gegen einen leeren Auffangbehälter ausgetauscht werden kann. Als Halterung ist beispielsweise ein Haltebügel vorgesehen, in welchen der Auffangbehälter eingelegt und/oder eingeklemmt werden kann.

Zur Befestigung des Auffangbehälters an der Halterung weist diese wenigstens ein Spannelement auf. Als Spannelement ist beispielsweise ein elastischer oder dehnfester Gurt vorgesehen, der z. B. mit einem Klettverschluss, einer Schnalle, einem Haken oder dgl. verschlossen werden kann. Dabei ermöglicht die Verwendung eines Spannelementes eine flexible Anpassung an unterschiedlich große Auffangbehälter. Dazu kann das Spannelement z. B. mit einer Auflagefläche, insbesondere einem Auflagewinkel, kombiniert werden.

Die Erfindung betrifft außerdem die Verwendung eines auf einer Innenseite mit einer Kunststofffolie ausgekleideten Flüssigkeitsbehälters aus Karton zum Sammeln bzw. Auffangen von Altschmierstoff. Als derartiger Behälter kann beispielsweise ein sogenannter "Tetrapack-Behälter" verwendet werden. Insbesondere ist ein derartiger Behälter dabei mit einem Rückschlagventil ausgestattet, wie es in der DE 695 31 056 T2 beschrieben ist, auf welche im Rahmen der Offenbarung Bezug genommen wird.

Im Folgenden wird die Erfindung anhand der Zeichnung im Einzelnen beispielhaft erläutert. Die Erfindung ist jedoch nicht auf die dort dargestellte Merkmalskombinationen beschränkt. Vielmehr können in der Beschreibung und/oder den Figuren dargestellte Merkmale, einzeln oder in Kombination, unabhängig von ihrer Rückbeziehung in den Patentansprüchen erfindungswesentlich sein.

Es zeigen schematisch:
- Fig. 1: in perspektivischer Ansicht einen erfindungsgemäßen Schmierstoff-Auffangbehälter,
- Fig. 2: einen Längsschnitt durch den Auffangbehälter nach Fig. 1,
- Fig. 3: eine Unterseitenansicht des Auffangbehälters nach Fig. 1,
- Fig. 4: eine Draufsicht auf den Auffangbehälter nach Fig. 1,
- Fig. 5: eine Frontansicht auf den Auffangbehälter nach Fig. 1,
- Fig. 6: eine erfindungsgemäße Schmierstoffsammeleinrichtung, und
- Fig. 7: eine Detailansicht der Schmierstoffsammeleinrichtung nach Fig. 7.

Der Schmierstoff-Auffangbehälter 1 weist eine quaderförmige Gestalt auf, so dass diese leicht in eine winkelförmige Halterung 2 eingesetzt werden kann. In dieser kann der Schmierstoff-Auffangbehälter 1 mittels Spannelementen 3 befestigt werden. Die Halterung 2 kann mittels Befestigungslaschen 16 und Schrauben 4 z.B. an einer nicht dargestellten zu schmierenden Anlage angebracht werden. Auf Grund der formstabilen Hülle 5 des Schmierstoff-Auffangbehälters 1 kann mit den Spannelementen 3 eine gute Spannwirkung erzielt werden. Die formstabile Hülle besteht beispielsweise aus Wellpappe.

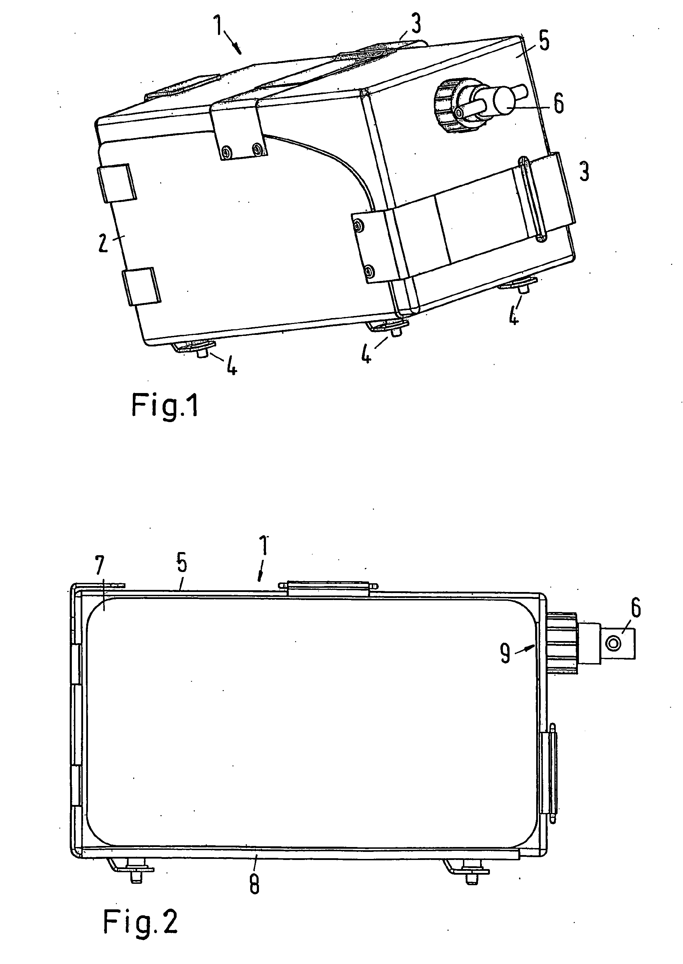

Zur Befüllung des Schmierstoff-Auffangbehälters 1 ist ein Anschlusselement 6 zum Anschluss einer nicht dargestellten Sammelleitung vorgesehen. Dieses steht in Strömungsverbindung mit einem innerhalb der formstabilen Hülle 5 angeordneten Auffangbeutel 7, welcher in dem Längsschnitt gemäß Fig. 2 dargestellt ist.

Dieser Auffangbeutel 7 ist lose in der formstabilen Hülle 5 des Schmierstoff-Auffangbehälters 1 aufgenommen. In einer alternativen Ausgestaltung kann der Auffangbeutel zumindest teilweise mit einer Wand der Hülle 5 verbunden sein. Insbesondere kann ein Materialverbund zwischen dem Auffangbeutel 7 und der Wand vorgesehen sein. Der Auffangbeutel 7 weist eine Einfüllöffnung 9 auf, welche mit dem Anschlusselement 6 in Strömungsverbindung steht. Innerhalb dieses Anschlusselementes 6 ist, nicht im Einzelnen dargestellt, ein Rückschlagventil angeordnet, welches eine Strömung aus dem Auffangbeutel 7 durch das Anschlusselement 6 nach außen verhindert.

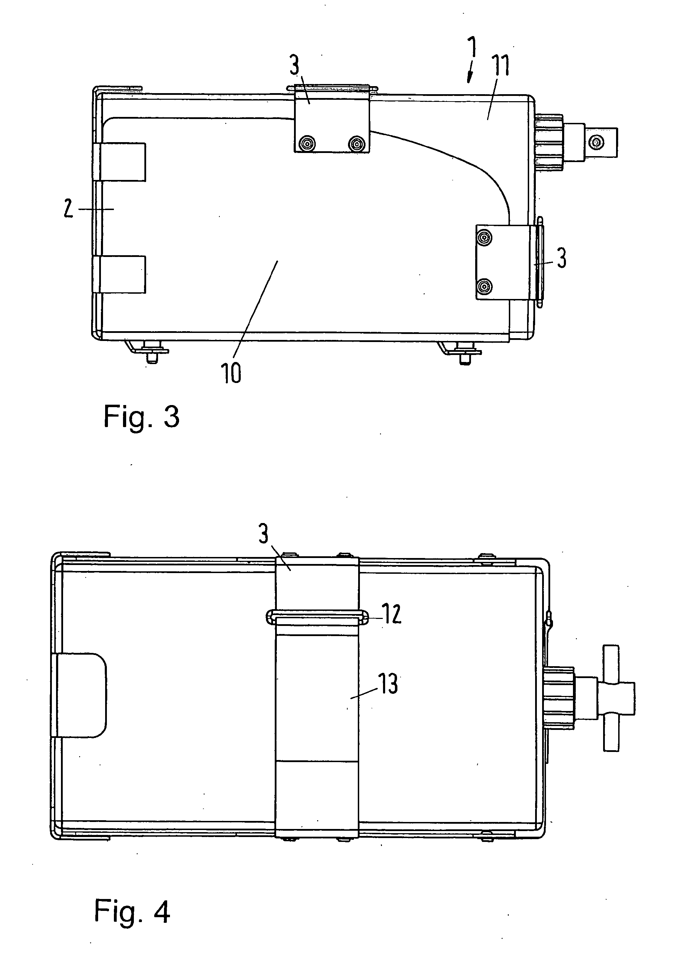

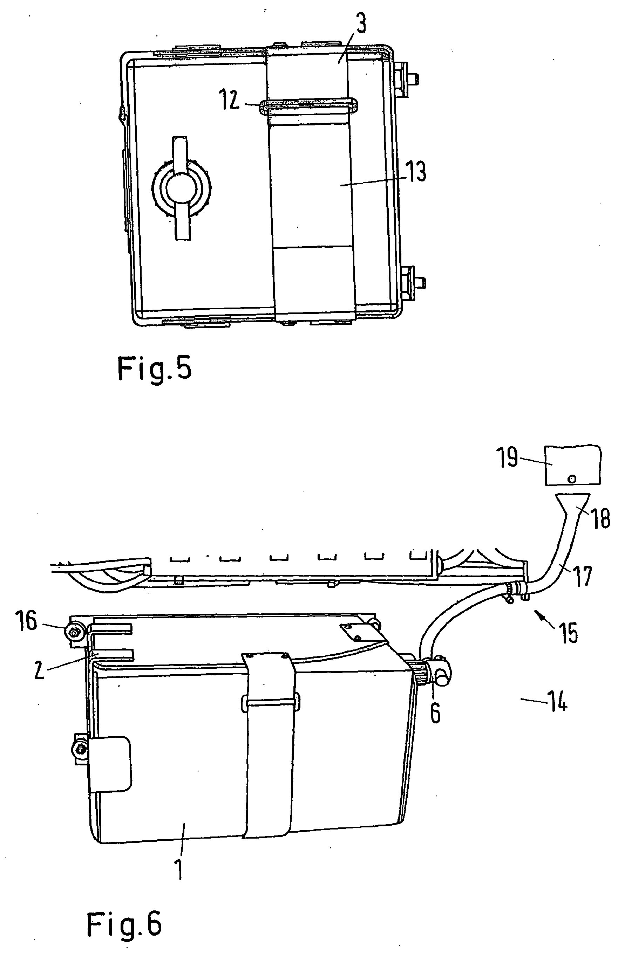

Wie aus der Unterseitenansicht gemäß Fig. 3 ersichtlich ist, weist die Halterung 2 einen Boden 8 und eine Seitenwand 10 auf, an denen der Schmierstoff-Auffangbehälter 1 anliegt. Dabei ist die Seitenwand 10 der Halterung 2 kleiner als die dieser zugewandte Fläche 11 des Schmierstoff-Auffangbehälters 1 ausgestaltet. Dadurch kann mittels der Spannelemente 3 eine flexible Anpassung der Halterung 2 an unterschiedliche Größen eines Auffangbehälters 1 vorgenommen werden. Die Figuren 4 und 5 zeigen, dass die Länge der gurtartigen Spannelemente 3 mittels einer entsprechenden Schnallenvorrichtung 12 und einem Klettverschluss 13 angepasst werden kann.

Dies ermöglicht eine Anordnung des Schmierstoff-Auffangbehälters 1 an einer zu schmierenden Anlage 14 in einer Schmierstoffsammeleinrichtung 15, wie sie in Fig. 6 dargestellt ist. Die Halterung 2 ist mittels herkömmlichen Zylinderkopfschrauben 4, die durch die Befestigungslaschen 16 ragen, an der zu schmierenden Anlage 14 angeschraubt. In der Halterung 2 ist der Schmierstoff-Auffangbehälter 1 mittels der Klettverschluss-Spannelemente 3, 13 eingespannt. An das Anschlusselement 6 des Schmierstoff-Auffangbehälters 1 ist eine Sammelleitung 17 angeschlossen, welche mit einem Absaug- oder Auffangelement 18 in Strömungsverbindung steht. Dieses Auffangelement 18 ist einer Schmierstelle 19 so zugeordnet, dass austretender Schmierstoff aufgefangen und durch die Sammelleitung 17, an der weitere Schmierstellen angeschlossen sein können, in den Schmierstoff-Auffangbehälter 1 geleitet wird.

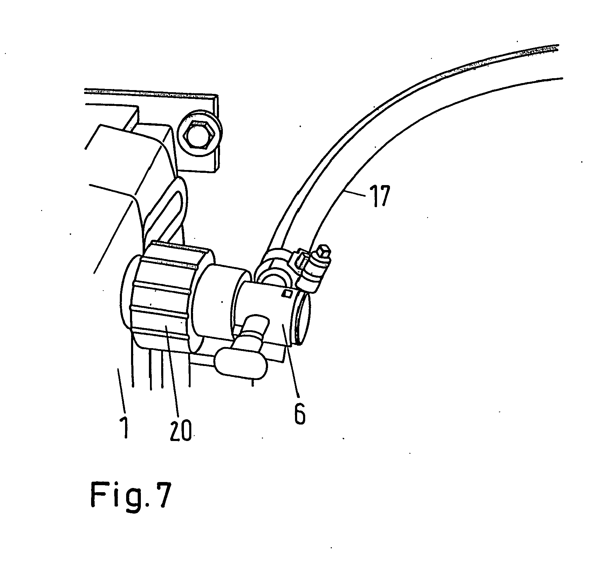

Zum Entfernen des Anschlusselementes 6 von dem Schmierstoff-Auffangbehälter 1 kann eine in Fig. 7 gezeigte Überwurfmutter 20 gelöst werden. Der Schmierstoff-Auffangbehälter 1 ist dabei so ausgestaltet, dass bei Entfernen des Anschlussstückes 6 ein an der Einfüllöffnung des Schmierstoff-Auffangbehälters 1 vorgesehenes Rückschlagventil schließt. Gleichermaßen ist in dem Anschlusselement 6 selbst ebenfalls ein Rückschlagventil angeordnet, welches hier im Inneren verborgen und daher nicht dargestellt ist, das ein Leerlaufen der Sammelleitung 17 verhindert. Auf diese Weise kann ein einfacher und sauberer Wechsel des Schmierstoff-Auffangbehälters 1 erfolgen.

### Bezugszeichenliste:

- 1: Schmierstoff-Auffangbehälter
- 2: Halterung
- 3: Spannelemente
- 4: Schraube
- 5: formstabile Hülle
- 6: Anschlusselement
- 7: Auffangbeutel
- 8: Boden
- 9: Einfüllöffnung
- 10: Seitenwand
- 11: Seitenfläche des Schmierstoff-Auffangbehälters
- 12: Schnallenelement
- 13: Klettverschluss
- 14: zu schmierende Anlage
- 15: Schmierstoffsammeleinrichtung
- 16: Befestigungslasche
- 17: Sammelleitung
- 18: Absaug- oder Auffangelement
- 19: Schmierstelle
- 20: Überwurfmutter

## Patentansprüche

1. Schmierstoff-Auffangbehälter (1) mit einer formstabilen Hülle (5) und einem darin aufgenommenen Auffangbeutel (7), welcher wenigstens eine Einfüllöffnung (9) aufweist.

2. Schmierstoff-Auffangbehälter (1) nach Anspruch 1, **dadurch gekennzeichnet, dass** die formstabile Hülle (5) als Wandmaterial Karton, Pappe oder Wellpappe aufweist.

3. Schmierstoff-Auffangbehälter (1) nach Anspruch 1 oder 2, **dadurch gekennzeichnet, dass** der Auffangbeutel (7) ein Kunststoffbeutel ist.

4. Schmierstoff-Auffangbehälter (1) nach einem der vorhergehenden Ansprüche, **dadurch gekennzeichnet, dass** der Auffangbeutel (7) und das Wandmaterial (8) der formstabilen Hülle (5) einen Materialverbund bilden.

5. Schmierstoff-Auffangbehälter (1) nach einem der vorhergehenden Ansprüche, **dadurch gekennzeichnet, dass** die Einfüllöffnung (9) mit einem Verschluss, insbesondere einem Schnellverschluss, versehen ist.

6. Schmierstoff-Auffangbehälter (1) nach einem der vorhergehenden Ansprüche, **dadurch gekennzeichnet, dass** die Einfüllöffnung (9) ein Anschlusselement (6) zum Anschluss einer Sammelleitung (17) aufweist.

7. Schmierstoff-Auffangbehälter (1) nach einem der vorhergehenden Ansprüche, **dadurch gekennzeichnet, dass** an der Einfüllöffnung (9) ein Rückschlagventil angebracht ist.

8. Schmierstoff-Auffangbehälter (1) nach Anspruch 7, **dadurch gekennzeichnet, dass** das Rückschlagventil durch ein in die Einfüllöffnung (9) einsetzbares Anschlussstück, insbesondere einer Sammelleitung (17), öffenbar ist, indem ein Dichtungselement des Rückschlagventils gegen eine Federkraft aus einem Ventilsitz hebbar ist und ein Strömungsquerschnitt freigebbar ist.

9. Schmierstoff-Auffangbehälter (1) nach einem der vorhergehenden Ansprüche, **dadurch gekennzeichnet, dass** die Einfüllöffnung (9) insbesondere wiederholbar lösbar an der formstabilen Hülle (5) befestigt ist.

10. Schmierstoff-Auffangbehälter (1) nach einem der vorhergehenden Ansprüche, **dadurch gekennzeichnet, dass** der Auffangbeutel (7) im Bereich der Einfüllöffnung (9) insbesondere wiederholbar lösbar befestigt ist und insbesondere ansonsten lose in der formstabilen Hülle (5) aufgenommen ist.

11. Schmierstoffsammeleinrichtung (15) mit wenigstens einem an einer Schmierstelle (19) anbringbaren Auffangelement (18) zum Auffangen von Schmierstoff, welcher von der Schmierstelle (19) abgegebenen wird, **dadurch gekennzeichnet, dass** das Auffangelement (18) über wenigstens eine Sammelleitung (17) mit wenigstens einem Auffangbehälter (1), insbesondere nach einem der Ansprüche 1 bis 10, in Strömungsverbindung steht.

12. Schmierstoffsammelvorrichtung (15) nach Anspruch 11, **gekennzeichnet durch** wenigstens ein Absaugelement zum Absaugen von Schmierstoff, welcher von der Schmierstelle (19) abgegeben wird.

13. Schmierstoffsammelvorrichtung (15) nach Anspruch 11 oder 12, **dadurch gekennzeichnet, dass** der Auffangbehälter (1) wiederholbar lösbar mit der Sammelleitung (17) verbunden ist.

14. Schmierstoffsammelvorrichtung (1) nach einem der Ansprüche 11 bis 13, **gekennzeichnet durch** wenigstens eine Halterung (2) zur wiederholbar lösbaren Befestigung des Auffangbehälters (1).

15. Schmierstoffsammelvorrichtung (15) nach Anspruch 14, **dadurch gekennzeichnet, dass** die Halterung (2) wenigstens ein Spannelement (3) zur Befestigung des Auffangbehälters (1) in oder an der Halterung (2) aufweist.
